(19) Europäisches Patentamt European Patent Office Office européen des brevets

(11) **EP 2 216 724 A1**

(12) **EUROPEAN PATENT APPLICATION**

(43) Date of publication:
**11.08.2010 Bulletin 2010/32**

(51) Int Cl.:
***G06F 17/30*** *(2006.01)*

(21) Application number: **10250102.0**

(22) Date of filing: **22.01.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **30.01.2009 US 362734**

(71) Applicant: **Navteq North America, LLC**
**Chicago, Illinois 60606 (US)**

(72) Inventors:
• **Beckner, Michael T.**
  **Washington, DC 20005 (US)**
• **Seiler, Karl E.**
  **Chicago, IL 60601 (US)**

• **Jimenez, Ricardo Leon**
  **Silver Spring, MD 20910 (US)**
• **Devereux, Jennifer E**
  **New York, NY 10128 (US)**
• **Kurspahic, Tarik**
  **Washington, DC 20002 (US)**
• **Auriol, Frédéric J**
  **75006 Paris (FR)**
• **Lavreysen, Rob André R**
  **2000 Antwerp (BE)**

(74) Representative: **Palmer, Jonathan R.**
  **Boult Wade Tennant**
  **Verulam Gardens**
  **70 Gray's Inn Road**
  **London WC1X 8BT (GB)**

(54) **Method and system for assessing quality of location content**

(57)     A method and system for assessing the quality of location content is disclosed. The method includes evaluating the quality of location content based on who provided the content, the accuracy of the location data associated with the content, the integrity of the content, and when the content was provided. As a result of the evaluation, a quality score is generated. The quality score provides an indication of the reliability of the location content. The quality score may be updated when a change is made to the content.

FIG. 1

## Description

REFERENCE TO RELATED APPLICATIONS

The present patent application is related to the copending patent applications filed on the same date, Ser. No. 12/362,751, entitled "METHOD AND SYSTEM FOR MANAGING RELATIONSHIPS BETWEEN LOCATION IDENTIFIERS"; Ser. No. 12/362,767, entitled "METHOD AND SYSTEM FOR REFRESHING LOCATION CODE DATA"; Ser. No. 12/362,786, entitled "METHOD FOR REPRESENTING LINEAR FEATURES IN A LOCATION CONTENT MANAGEMENT SYSTEM"; and Ser. No. 12/362,807, entitled "METHOD AND SYSTEM FOR EXCHANGING LOCATION CONTENT DATA IN DIFFERENT DATA FORMATS."

FIELD

The present invention relates generally to location-based services, and more particularly, relates to assessing the quality of location content available from location-based systems.

BACKGROUND

Various technologies have been developed that provide navigation-related and map-related services. For example, vehicle navigation systems can determine where a vehicle is located and provide directions to travel to a desired destination. Also, Internet sites are available that provide maps, directions for traveling to a desired destination from a specified starting point, and other map-related services. Further, hand-held devices are available that can determine one's position and provide a map of one's surroundings.

In order to provide these and other map-related functions and features, navigation systems use geographic data. The geographic data may be in the form of one or more geographic databases that include data representing physical features in the geographic region. The geographic database includes information about the represented geographic features, such as one-way streets, position of the roads, speed limits along portions of roads, address ranges along the road portions, turn restrictions at intersections of roads, direction restrictions, such as one-way streets, and so on. Additionally, the geographic data may include points of interest, such as restaurants, hotels, airports, gas stations, stadiums, police stations, and so on.

This geographic data may be stored in a geographic database, such as a geographic database published by NAVTEQ North America, LLC of Chicago, Illinois. In addition to the data obtained by a map vendor, content sources have data regarding locations in a geographic area. The content sources may provide their data to the map vendor for inclusion into the geographic database. For example, an owner of a chain restaurant may provide the map vendor with a current list of all their locations and for each of the locations the list may include address, telephone numbers, hours of operation, menu, web page address, and other information about the location.

As the amount of information stored in a geographic database increases, it becomes more difficult for the map vendor to add the third party data to the geographic database. As a result, location content management systems have been developed to allow multiple parties to provide data related to a location, which is sometimes referred to as "location content" or simply "content." However, a user that obtains location content from a location content management system cannot tell the reliability of the content given that there is not a standard method for assessing the quality, which represents the confidence in the accuracy of the content relative to reality represented by ground-truth.

Accordingly, it would be beneficial if the location content management system provides an indication of quality for the content from a wide range of acquisition and validation techniques. The indication of quality may encourage content sources and distributors to frequently improve their data and support through an easily understood quality method. The indication of quality may also allow content sources to better control the destiny of their location content, while allowing content distributors to more dynamically customize content packages that meet their needs.

SUMMARY

A method and system for assessing the quality of location content is disclosed. A location content management system receives location content in the form of a profile from a content source. The location content management system includes a content quality system that evaluates the quality of location content. The evaluation includes evaluating who provided the content, the accuracy of the location data associated with the content, the integrity or completeness of the content, and when the content and location data was provided to the location content management system. As a result of the evaluation, the content quality system generates one or more quality scores. The quality score provides an indication of the reliability of the location content. Preferably, the method for assessing the quality of location content is repeated when a change is made to the content.

These as well as other aspects and advantages will become apparent to those of ordinary skill in the art by reading the following detailed description, with reference where appropriate to the accompanying drawings. Further, it is understood that this summary is merely an example and is not intended to limit the scope of the invention as claimed.

BRIEF DESCRIPTION OF THE DRAWINGS

Presently preferred embodiments are described below in conjunction with the appended drawing figures, wherein like reference numerals refer to like elements in the various figures, and wherein:

> Figure 1 is a block diagram of a location based system, according to an example;
> Figure 2 is a block diagram of a profile data structure, according to an example;
> Figure 3 is a flow diagram of a method for providing a content quality score, according to an example;
> Figure 4 is a matrix for analyzing the quality of the content, according to an example;
> Figure 5 is a flow diagram of a method for updating the content quality score;
> according to an example;
> Figure 6 is an example output from the location content management system depicted in Figure 1, according to an example; and
> Figure 7 is a table that may be used to analyze the quality of a location identifier, according to an example.

DETAILED DESCRIPTION

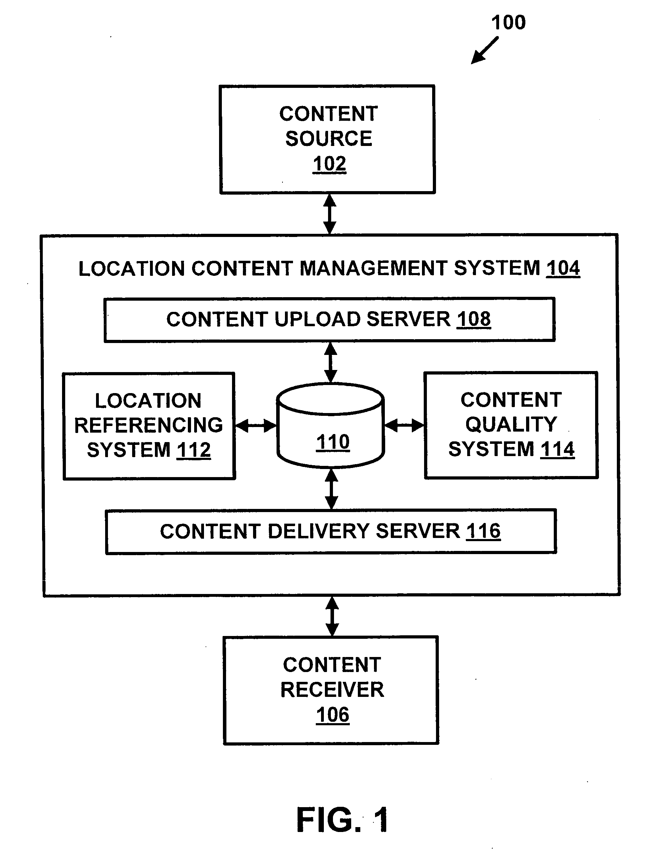

Figure 1 is a block diagram showing a location based system 100. The location based system 100 includes a content source 102, a location content management system 104, and a content receiver 106. The location content management system 104 obtains content from the content source 102. The location content management system 104 provides content to the content receiver 106. Additionally, the location content management system 104 may provide one or more quality scores associated with the content to the content receiver 106 and/or the content source 102.

The content is any information associated with a location that describes attributes of the location. The information may be slowly changing content (i.e., does not change frequently), such as a street address, a telephone number, a fax number, and hours of operation. The information may be dynamic content (i.e., changes frequently), such as gas prices, weather reports, air travel status, and traffic reports. The information may be in any format, including text, two-dimensional images, three-dimensional images, video, multimedia, and so on.

The content source 102 is any entity that provides content to the location content management system 104. For example, the content source 102 may be a map vendor, a location owner/operator, a government agency, a chamber of commerce, a business owner, a business franchise, an individual, or any other party. While one content source 102 is depicted in Figure 1, it is understood that the location content management system 104 obtains content from many content sources.

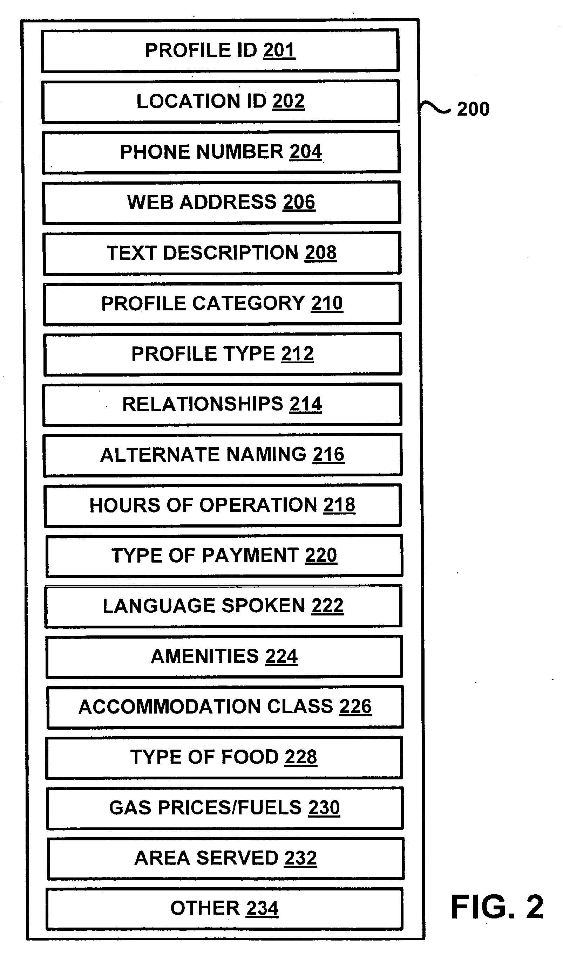

The content source 102 provides the content to the location content management system 104 in the form of a profile. The profile is a data structure for content data. Each profile is assigned a unique identifier (i.e., a Profile ID). An example profile is shown in Figure 2.

The content receiver 106 is any entity that accesses content from the location content management system 104. The content receiver 106 may be an end-user device, such as a personal computer, a mobile telephone, and a portable hand-held device. Additionally, the content receiver 106 may be an intermediate application or service that distributes location-based content to an end-user device. While one content receiver 106 is depicted in Figure 1, it is understood that the location content management system 104 provides content to many content receivers. Additionally, the content source 102 may be the same as the content receiver 106 in certain situations. For example, the content source 102 may provide the content to the location content management system 104 for location referencing the content and then access the location content for distribution.

The location content management system 104 is a combination of hardware, software, and/or firmware that gathers, processes, and delivers location content. The location content management system 104 includes a content upload server 108, a content store 110, a location referencing system 112, a content quality system 114, and a content delivery server 116. The location content management system 104 may include other entities as well.

The content upload server 108 may display a user interface for providing location content to the location content management system 104. The user interface allows the content source 102 to enter, manage, and locate their content in a self-serve environment. The user interface may include a tool for inputting location information that includes fields that correspond to the data stored in the profile. The user interface allows the content source 102 to enter text and attach files, such as documents, image files, video files, sound files, and so on.

Additionally or alternatively, the content upload server 108 may provide a Web service to support machine-to-machine interaction over a network. The Web service may support any protocol. The content source 102 may use the Web service to add or modify location content via bulk load.

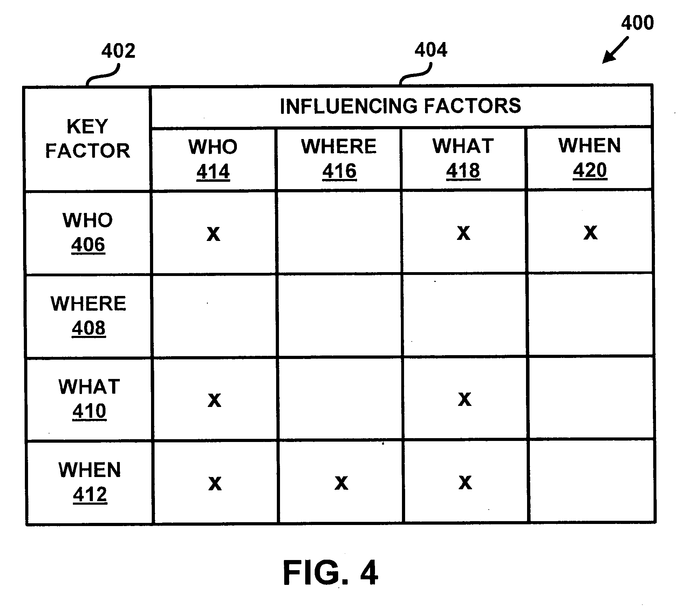

The content upload server 108 also verifies the content source 102. The content upload server 108 may verify an individual, a business, and/or an organization with any suitable method or combination of methods including, but not limited to, a double opt-in routine, community validation, manual validation, and partner validation. Verification is discussed further with reference to Figure 4.

The content upload server 108 stores the content in the content store 110. The content store 110 may be any type of memory that allows read/write access. The content upload server 108 may also store an indication of what verification method or combination of methods were used to verify the content source 102 in the content store 110 or in a separate memory device. For example, the indication may be a binary flag, a scaling factor, or word identifying the verification method.

The user interface and/or the Web service also allows the content source 102 to receive a quality score associated with the content from the location content management system 104. The content source 102 may receive more than one quality score as well. The quality score may also be stored in the content store 110; however, the quality score may be stored in a separate memory device with a reference to the associated content. After receiving the quality score, the content source 102 may make changes to the content profile affecting the score.

The location referencing system 112 provides a link between location content and the geographic location associated with the content. The link is needed when the location content is decoupled from (i.e., not included in) the geographic database. In order to decouple the content from the geographic database, the location referencing system 112 assigns a location identifier to one or more locations. The location identifier may represent an address, a geographic coordinate (e.g., latitude, longitude, altitude), a reference to a map database object, and/or an administrative area, such as a city, a park, a region, and so on.

The location referencing system 112 may randomly assign a location identifier to a location. Alternatively, the location referencing system 112 may assign the location identifiers in numerical order or in any other organized fashion. The location identifier may be a numerical value. For example, the location identifier may be a 16-bit number, a 32-bit number, a 64-bit number, and so on. Alternatively, the location identifier may include a combination of numbers, letters, and/or characters.

The content quality system 114 evaluates the quality of each profile. The evaluation may be based on whether the content owner is trustworthy, the location data is accurate, the profile is sufficiently complete and accurate, and/or the data in the profile is relatively current. The content quality system 114 stores a quality score for the profile in the content store 110 or other memory device. The content quality system 114 may re-evaluate the profile quality each time aspects of the profile are changed, at a regular interval, at the request of the content source 102 and/or the content receiver 106, or at any other time. The content quality system 114 may store the historical quality scores for the content so that the content source 102 and/or the content receiver 106 can retrieve a score trend report to review the score performance.

The content delivery server 116 may display a user interface for retrieving location content from the location content management system 104. The user interface may be the same user interface used by the content source 102 or a separate user interface. Additionally or alternatively, the content delivery server 116 may provide a Web service in a similar manner as the content upload server 108. The user interface/Web service may allow the content receiver 106 to obtain location content in a self-serve environment. The user interface/Web service may also allow the content receiver 106 to receive one or more quality scores associated with the obtained content from the location content management system 104. After receiving the quality score, the content receiver 106 may determine whether the quality of the content is sufficient for the content receiver's needs.

Figure 2 is a data structure for a profile record 200. The data attributes depicted in Figure 2 include profile identification 201, a location identification 202, telephone number 204, web site address 206, text description 208, profile category 210, profile type 212, relationships 214, alternate naming 216, hours of operation 218, type of payment 220, language spoken 222, amenities 224, accommodation class 226, type of food 228, gas prices/fuels 230, and area served 232. As this is not an exhaustive list of all the data attributes for the profile record 200, Figure 2 also depicts other attributes 234. For example, the profile 200 may also include images of the location, special events, nearby parking, and so on.

The profile record 200 includes a unique profile ID 201 by which the data record can be identified in the content store 110. The profile record 200 also includes a location ID 202 assigned by the location referencing system 112. The location ID 202 provides the link between the location content and the geographic location associated with the content.

The telephone number attribute 204 includes the telephone number of the place at a specific location. The telephone number attribute 204 may also include sub-attributes, such as a telephone type, to identify whether the telephone number is a toll free number, a mobile telephone number, an after-hours number, and so on. The profile record 200 may also include similar information regarding fax numbers.

The web address attribute 206 includes the name and/or a URL for a web page associated with the place. The text description attribute 208 may include a general description of the place. For example, the text description attribute 208 may describe that the location is a family owned restaurant that has been in business for over fifty years.

The profile 200 may include one or more profile category attributes 210 that identify whether the place is a retail store, a gasoline station, a restaurant, a hotel, a coffee shop, a movie theater, a residence, an office, or any other category type. Within the profile category 210, the profile type attribute 212 identifies the type of restaurant, store, hotel, and so on. For example, a place having the profile category of restaurant may have a profile type attribute 212 identifying the restaurant as fast food, American, pizza, Italian, Chinese, steak, etc.

The relationships attribute 214 provides information regarding the relationships between various places. The relationship attribute 214 may include the Profile IDs and the type of relationship. For example, all Shell Oil Company gasoline stations may be related. As another example, a corporate headquarters may be related to the corporation's field offices.

The alternate naming attribute 216 identifies other language that applies to a place. For example, the Boeing Building in Chicago, Illinois may also be referred to as the 425 Building by other tenants in the building.

The hours of operation attribute 218 identifies the operating hours for the place associated with the location. The type of payment attribute 220 identifies the type of payment accepted, such as cash, credit (including what type: VISA, Mastercard, Discover, American Express, Diners Card, and so on), and personal checks. The language spoken attribute 222 identifies the languages spoken at the place.

The amenities attribute 224 indicates the types of amenities available at the place based on the profile category attribute 210. For example, a place having the profile category of hotel may have an amenities attribute 224 identifying a pool, a gym, a spa, a restaurant, valet parking, and any other amenity that a hotel can offer.

The accommodation classification attribute 226 identifies the classification of a place having a profile category attribute 210 of hotel. For example, the accommodation classification attribute 226 may be based on a "star" system where a five-star hotel is the best ranking. The accommodation classification attribute 226 may vary by country based on what classification system is most commonly used in that country.

The type of food attribute 228 identifies the type of food served at a place having a profile category attribute 210 of restaurant. The gas prices/fuels attribute 230 identifies the type of fuel and associated prices sold at a place having a profile category attribute 210 of service station.

The area served attribute 232 indicates the geographic coverage where the place operates. The geographic coverage may be defined by geographic coordinates, postal codes, city limits, bounds defined by roads and other geographic features, or by any other means.

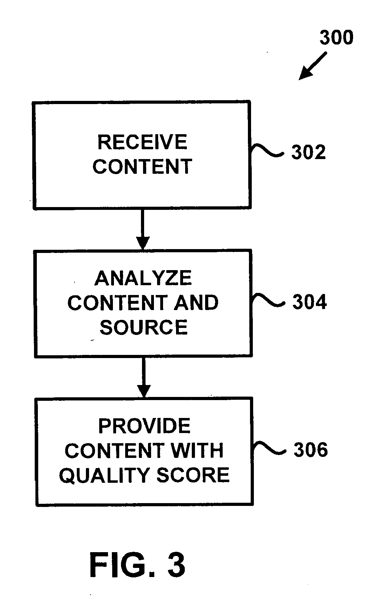

Figure 3 is a flow diagram for a method 300 for providing a content quality score. The method 300 may be used for any type of content now known or developed in the future and obtained from any source or acquisition method.

At block 302, the location content management system 104 receives content from the content source 102. The content source 102 adds a new profile or modifies an existing profile via the user interface and/or Web service provided by the content upload server 108. For example, the content source 102 may add or modify content via bulk load provided by the content upload server 108.

At block 304, the content quality system 114 analyzes the content and the source of the content. In some cases, the content quality system 114 may use a matrix to calculate the score. In mathematics, a matrix is a rectangular table of elements, which may be added and multiplied. As used herein, a matrix includes any table or other organization of variables that may be used to calculate a score. An example matrix is depicted in Figure 4. The matrix of variables allows for an on-going, automatic weighted assessment. Preferably, the matrix variables can be modified at any time without impacting the location based system 100.

At block 306, the content delivery server 116 provides content to the content receiver 106. In addition, the content delivery server 116 may provide an indication of the accuracy or reliability of the content provided to the content receiver 106. In one example, the content delivery server 116 provides a quality score based on the analysis conducted at block 304 to the content receiver 106. In another example, the content delivery server 116 provides an attribute with the content. In this example, the attribute reflects the quality score calculated by the content quality system 114. Additionally, the content delivery server 116 may provide the quality score and/or attribute to the content source 102.

Figure 4 is a matrix 400 that the content quality system 114 may use to analyze the quality of location content at block 304. The matrix 400 includes key factors 402 for analyzing the content. For each of the key factors 402, the matrix 400 may include additional influencing factors 404. In this example, the matrix 400 includes four key factors 402: who 406, where 408, what 410, and when 412; and four influencing factors: who 414, where 416, what 418, and when 420.

The matrix 400 may include other factors as well. For example, the matrix 400 may include a how factor. The how factor may provide an indication of the trustworthiness of the method used to validate the accuracy of the data. Additionally, not all of the key factors 402 and influencing factors 404 may be used to analyze the content. The content quality system 114 assigns numerical weights and values to each of the key factors 402 and the associated influencing factors 404.

The who factor 406 refers to the authority of a content source 102. The authority or trustworthiness of the content source 102 is evaluated based on how the content source 102 was verified by the location content management system 104. The content source 102 may be verified by one or more methods. The location content management system 104 may provide a different value for each of the levels of trustworthiness and vary this value based on any influencing factors 404.

The content source 102 may be verified using a double opt-in routine to prevent the high-volume creation of false user accounts by spammers and to determine that the content source is human rather than a spambot. The double opt-in routine may start with the content source 102 registering with the location content management system 104, for example, by entering their name, email address, telephone number, and/or a password. In response to the registration, the location content management system 104 generates an automatic email to the content source 102. The email includes a link that the content source 102 activates to complete the registration.

The value assigned to the double opt-in routine may be influenced by the when influencing factor 420. For example, the value assigned to the double opt-in routine may be adjusted based on the amount of time it takes for the content source 102 to activate the link.

The content source 102 may be verified using community validation. The community validation may start with the content source 102 registering with the location content management system 104. In response to the registration, the location content management system 104 identifies other content sources in an area near the content source 102 (e.g., the other content sources may be located within a city block, a threshold distance, a city's limits, a zip code area, and so on, referred to herein as neighboring content sources). The location content management system 104 prompts the content source 102 to notify the neighboring content sources regarding the content source's presence and request verification. The location content management system 104 tracks the number of neighboring content sources notified.

The value assigned to the community validation may be influenced by the who influencing factor 414. For example, the value assigned to the community validation may be adjusted based on the number and verification score of the neighboring content sources verifying the content source 102. The value assigned to the community validation may also be influenced by the what influencing factor 418. For example, the value assigned to the community validation may be adjusted based on the type of content provided by the content source 102. The value assigned to the community validation may also be influenced by the when influencing factor 420. For example, the value assigned to the community validation may be adjusted based on the date of the last verification.

The content source 102 may be verified using partner validation. The partner validation is provided by a third party that provides verification services. The third party may use digital certificates or other verification methods. The third party may verify public or private information related to the individual, business, or organization including, but not limited to, name, address, telephone number, and government identification numbers. The value assigned to the partner validation may be influenced by the who influencing factor 414 (e.g., score of the partner), the what influencing factor 418 (e.g., type of content), and/or the when influencing factor 420 (e.g., date of last verification).

The content source 102 may be verified directly by the location content management system 104. The location content management system 104 may use manual data verification, data matching, verification from third party databases, or other verification methods. The value assigned to the direct verification may be influenced by the who influencing factor 414 (e.g., score in the location content management system 104), the what influencing factor 418 (e.g., type of content), and/or the when influencing factor 420 (e.g., date of last verification).

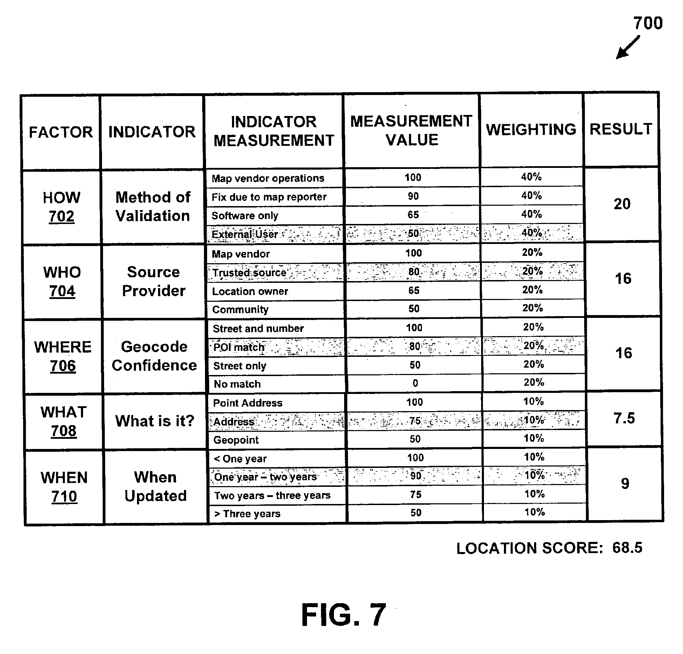

The where factor 408 refers to the geospatial accuracy of a location. The location referencing system 112 evaluates location accuracy. The location content management system 104 may provide a where factor 408 value as a number between 0 and 100 that indicates the level of trust for the accuracy of the location relative to ground-truth, which may be determined by the method used to locate the location (e.g., by one or more of address, latitude/longitude, and administrative area). Also, the method used to validate the location's accuracy may be used to calculate a location score as described with reference to Figure 7.

Figure 4 depicts that there are no influencing factors 404 for the where factor 408. However, the matrix 400 may be modified to include influencing factors 404. For example, the matrix 400 may identify the who influencing factor 414 as an influencing factor 404 for the where factor 408.

The what factor 410 refers to the integrity of content provided by the content source 102. The content may include slowly changing and dynamic content. In addition, the content may include text, images, multimedia, documents, and any other form of content. The content quality system 114 may evaluate completeness of the content by determining how much data is located in the content's profile. For example, the profile may have data in 75% of the data fields of the profile. Additionally, the content quality system 114 may evaluate completeness by the type and/or number of content formats provided in the profile. For example, a profile including text, images, and attached documents is more complete than a profile having text only.

The content quality system 114 may use other methods to evaluate integrity, such as providing a lower score for content that includes inappropriate information. For example, the location content management system 104 may have the ability to identify potential infringement of intellectual property rights of media (e.g., images, video, audio) provided by the content source 102.

The value assigned to the what factor 410 may be influenced by the who influencing factor 414 (i.e., the weight of the content source 102). The value assigned to the what factor 410 may also be influenced by the what influencing factor 418. For example, the profile type attribute 212 may influence the what factor 410.

The when factor 412 refers to the freshness of content provided by the content source 102. The when factor 412 reflects how often a profile is re-verified by the content source 102 or the location content management system 104, which includes both the profile's owner and other users contributing data to the profile. The when factor 412 encourages users to develop and update their profiles. A profile that has not been visited and/or updated for a period of time receives a lower score than a profile that is updated more frequently. The when factor may also reflect when geographic location data associated with the content is updated.

The value assigned to the when factor 412 may be influenced by the who influencing factor 414. For example, the weight of the profile owner, influencing peers, or third parties that have added content to the profile may influence the value assigned to the when factor 412. The value assigned to the when factor 412 may also be influenced by the where influencing factor 416. For example, the location score applied to the location by the location referencing system 112 may influence the value assigned to the when factor 412. The value assigned to the when factor 412 may also be influenced by the what influencing factor 418. For example, the profile type attribute 212 may influence the when factor 412.

The computation of the quality score or combination of scores may use algorithms assigning variable weighting criteria to each related factor or combination of factors. Each factor may relate to or impact other factors, resulting in dynamic score recalculations by the content quality system 114 through time and user and/or system interactions. Though the algorithms may be dynamically calculated according to changes in criteria, the user interface of the content upload server 108 and/or the content delivery server 116 may display scores as of the last interaction to provide content sources 102 and/or content receivers 106 an up-to-date snapshot of the quality of the content. The algorithm may be adapted to reflect changes in factors or accommodate new processes through time.

In one example, a total quality score may be calculated as follows:

$$Q = \alpha*A + \beta*B + \gamma*C + \delta*D$$

where A is the who factor 406 referring to the authority of a content source, B is the where factor 408 referring to the geospatial accuracy of a location, C is the what factor 410 referring to the integrity of content provided by the content source 102, D is the when factor 412 referring to the freshness of content provided by the content source 102, and $\alpha$, $\beta$, $\gamma$ and $\delta$ are coefficients representing the assigned weights.

A is computed according to the following:

$$A = \theta*E + \lambda*F + \sigma*G$$

where E is the value provided by the double-opt verification, F is the value provided by community validation, G is the value provided by partner validation, and $\theta$, $\lambda$ and $\sigma$ are coefficients representing the assigned weights. B is computed based on an accuracy value provided by the location referencing system 112, C is computed based on how much data is located in the content's profile, and D is computed based on the last date the content source 102 was validated by the community and/or partner.

In another example, separate scores may be calculated for confidence level of a location and place as follows:

$$X = \alpha*A + \beta*B$$

$$Y = \alpha*A + \gamma*C$$

where X and Y are the confidence levels of the location and place, respectively. A, B, and C are factors similar to the example above, and $\alpha$, $\beta$, and $\gamma$ are coefficients representing the assigned weights.

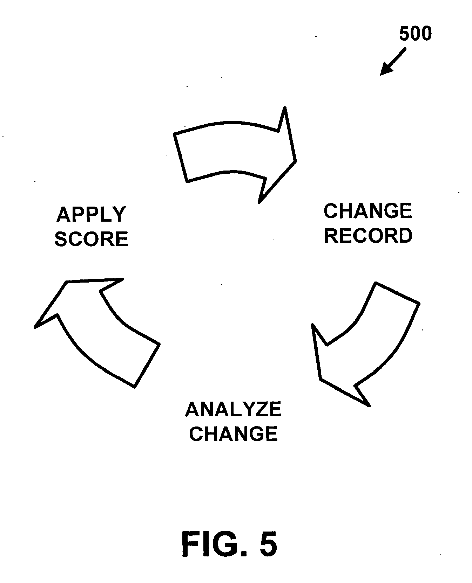

Figure 5 is a flow diagram for a method of updating the content quality score. The content quality system 114 may re-evaluate the content quality each time the profile is changed. For example, the profile change may include the content source 102 modifying data in the profile, the location referencing system 112 changing information regarding the location identifier, and/or the content quality system 114 obtaining additional information regarding verification, such as a community validation.

After the profile record is changed in any manner, the content quality system 114 analyzes the change as described with reference to Figures 3 and 4. The resulting quality score is stored in the content store 110 with the profile. The new quality score may overwrite the previous score or a running record of all or some of the quality scores may be maintained to provide a historical record.

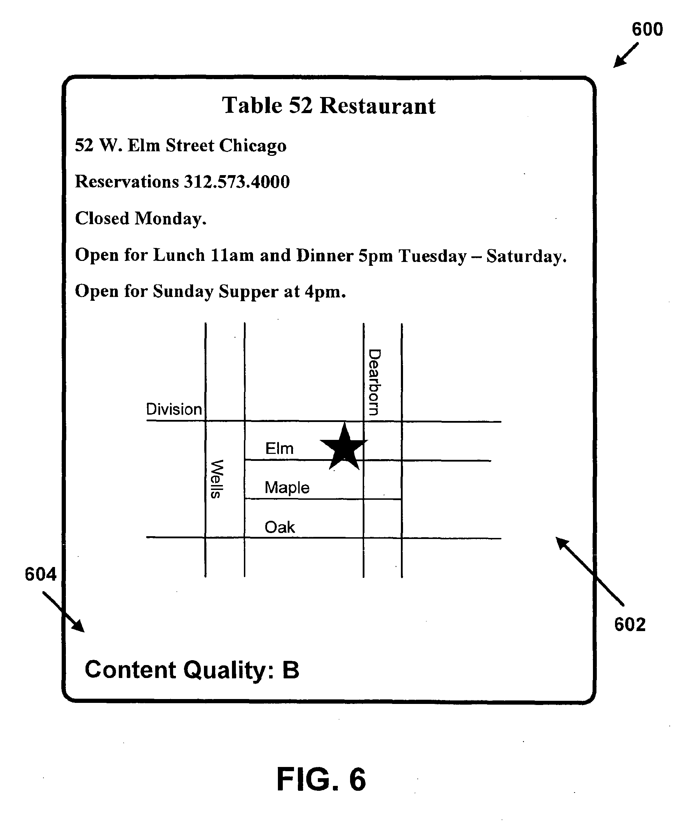

Figure 6 is an example output 600 from the location content management system 104. In this example, the output from the location content management system 104 includes the content 602 and a quality score 604. The quality score 604 may be based on a medal system (e.g., gold, silver, bronze), a star system (e.g., zero to five stars, where five stars indicates the highest quality), a letter grade (e.g., A, B, C, and F), a percentage (e.g., 70% chance the content is accurate), or other ranking system. In this example, the quality score 604 is based on a letter grade. While Figure 6 depicts a total quality score for the content, the location content management system 104 may also provide a quality score for each of the who, where, what, and when factors 406-412. The location content management system 104 may also provide a quality score for confidence level of the location and/or confidence level of the place.

The quality score allows both the content source 102 and the content receiver 106 to understand the relative confidence in the accuracy of location content. The quality score is an indication of whether the content owner is trustworthy, the location data is accurate, if and how the profile data was verified, the content of the profile is valuable, and the content is fresh. As a result of receiving the score, the content source 102 may take actions to obtain an improved score by updating the profile. The content receiver 106 may use the score to have greater flexibility in content packaging and/or to evaluate whether the content is sufficiently reliable for the intended purpose.

The method 300 for providing a content quality score and/or the matrix 400 may be used for other purposes as well. For example, a quality score may be calculated for data stored in the geographic database, such as a point of interest. Like a profile, data associated with a point of interest is stored as attributes in a data structure. Thus, in a similar way, the quality of the point of interest content can be evaluated based on who provided the data, how accurate the location data is for the point of interest, how complete the data is regarding the point of interest, and when the point of interest data was last entered and/or verified.

The point of interest content may also be evaluated based on how trustworthy the method used to validate the accuracy of the data is (i.e., the how factor). The methods may include validation by visiting the location, calling the location, using the internet to verify the location, software-based business rules to validate the location, or by trusting the content sources validation techniques. The value assigned to the how factor may be influenced by the who influencing factor 414 (e.g., a score in the location content management system 104), the what influencing factor 418 (e.g., the type of content), and/or the when influencing factor 420 (e.g., date of last verification).

As another example, a score may be calculated for a location identifier generated by the location referencing system 112. The location score is an indication of the confidence in the location data associated with the location identifier. For example, the location score may be a number between 0 and 100, with 100 representing the highest level of confidence.

Figure 7 is a table 700 that may be used to analyze the confidence level of a location identifier. Table 700 includes different factors for analyzing the confidence level of a location identifier. In this example, the table includes five factors: the how factor 702 referring to the method of location validation (e.g., manually verified, verified via a telephone conversation, verified via corroborated input from multiple sources, and so on), the who factor 704 referring to the source provider, the where factor 706 referring to the geocoder confidence level, the what factor 708 referring to the type of content, and the when factor 710 referring to the date that the location was last updated.

In this example, the definition of each factor may not necessarily be the same as the matrix 400 factors. Additionally, not all of the factors may be used to calculate a location score. For example, the how factor 702 and the where factor 706 may be used to generate a location score.

Figure 7 does not depict influencing factors; however, influencing factors may be used to evaluate the location identifier. In this example, the table 700 provides values and weights associate with each of the factors 702-710. The highlighted lines identify selections for a particular illustrative location score measurement, in this case 68.5. Like the content quality score, the location score may change as the indicators change.

As yet another example, a score may be calculated for a map correction submitted through a map reporter system. The map reporter system allows a user who discovers a potential error or omission in the geographic database to report the problem to the map vendor. For example, the geographic database may be missing data regarding a new subdivision, road, or point of interest. As another example, the geographic database may have incorrect or inaccurate information regarding a location. In addition, the user may provide the resolution to the potential error or omission to the map reporter system.

The map reporter score may be an indication of who submitted the report, where the problem was found, what type of problem was encountered, and when the report was submitted. For example, the who factor may be based on a user's past submissions, other user feedback, and/or a map vendor's ranking for the user. The score may be used by the map vendor to determine whether to further investigate the problem, to prioritize reports, and/or for other purposes. Additionally, the map vendor may provide the score to map users so that they can determine whether or not to trust a change that has not been verified.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

**Claims**

1. A method for assessing quality of location content, comprising:

   receiving location content associated with a geographical location from a content source;
   analyzing the location content based on variables including who is the location content source, accuracy of geographical location data associated with the location content, what content data is provided in a profile associated with the location content, and when the geographical location data and the content data is provided; and

providing an indication of quality of the location content based on the analysis.

2. The method of claim 1, wherein analyzing the location content includes using at least one matrix to calculate the who, where, what, and when variables.

3. The method of claim 2, wherein analyzing the location content includes using a set of algorithms associated with the at least one matrix to calculate the who, where, what, and when variables.

4. The method of claim 1, further comprising verifying the content source, wherein analyzing the location content includes evaluating how the content source was verified.

5. The method of claim 1, wherein analyzing the location content includes evaluating geospatial accuracy of a location.

6. The method of claim 1, wherein analyzing the location content includes evaluating how much data is located in the profile associated with the location content.

7. The method of claim 1, wherein analyzing the location content includes evaluating what types of data are located in the profile associated with the location content.

8. The method of claim 1, wherein analyzing the location content includes evaluating the accuracy of the data located in the profile associated with the location content.

9. The method of claim 1, wherein analyzing the location content further includes updating the analysis when the location content changes.

10. The method of claim 1, wherein analyzing the location content includes evaluating influences of one variable on another variable.

11. The method of claim 1, wherein providing an indication of quality of the location content includes providing the indication to one of: (a) a requester of the location content; or (b) the content source.

12. A system for providing an indication regarding reliability of information provided to the system, comprising:

a user interface that allows a user to provide information regarding a location;
a data store that stores the information regarding the location; and
a content quality system that evaluates the stored location information based on at least four factors and generates at least one quality score associated with the location information, wherein a first factor is associated with who is the user, wherein a second factor is associated with data regarding where the location is geospatially located, wherein a third factor is associated with what information the user provides, and wherein a fourth factor is associated with when the user provided the information.

13. The system of claim 12, further comprising a location referencing system that assigns an identifier to the location that is stored in the data store with the location information.

14. The system of claim 12, further comprising a content delivery server operable to provide the location information and the quality score to a requester of the location information.

15. A computer program which, when executed by a processor, carries out a method according to any one of claims 1 to 11.

100

CONTENT
SOURCE
102

LOCATION CONTENT MANAGEMENT SYSTEM 104

CONTENT UPLOAD SERVER 108

LOCATION
REFERENCING
SYSTEM 112

110

CONTENT
QUALITY
SYSTEM 114

CONTENT DELIVERY SERVER 116

CONTENT
RECEIVER
106

FIG. 1

PROFILE ID 201

LOCATION ID 202

~ 200

PHONE NUMBER 204

WEB ADDRESS 206

TEXT DESCRIPTION 208

PROFILE CATEGORY 210

PROFILE TYPE 212

RELATIONSHIPS 214

ALTERNATE NAMING 216

HOURS OF OPERATION 218

TYPE OF PAYMENT 220

LANGUAGE SPOKEN 222

AMENITIES 224

ACCOMMODATION CLASS 226

TYPE OF FOOD 228

GAS PRICES/FUELS 230

AREA SERVED 232

OTHER 234

**FIG. 2**

300

RECEIVE
CONTENT ~ 302

ANALYZE
CONTENT AND ~ 304
SOURCE

PROVIDE
CONTENT WITH ~ 306
QUALITY SCORE

# FIG. 3

402 404 400

| KEY FACTOR | INFLUENCING FACTORS | | | |
|---|---|---|---|---|
| | WHO 414 | WHERE 416 | WHAT 418 | WHEN 420 |
| WHO 406 | X | | X | X |
| WHERE 408 | | | | |
| WHAT 410 | X | | X | |
| WHEN 412 | X | X | X | |

# FIG. 4

500

APPLY
SCORE

CHANGE
RECORD

ANALYZE
CHANGE

# FIG. 5

**600**

## Table 52 Restaurant

**52 W. Elm Street Chicago**

**Reservations 312.573.4000**

**Closed Monday.**

**Open for Lunch 11am and Dinner 5pm Tuesday – Saturday.**

**Open for Sunday Supper at 4pm.**

**604**

**602**

## Content Quality: B

# FIG. 6

700

| FACTOR | INDICATOR | INDICATOR MEASUREMENT | MEASUREMENT VALUE | WEIGHTING | RESULT |
|---|---|---|---|---|---|
| HOW 702 | Method of Validation | Map vendor operations | 100 | 40% | 20 |
| | | Fix due to map reporter | 90 | 40% | |
| | | Software only | 65 | 40% | |
| | | External User | 50 | 40% | |
| WHO 704 | Source Provider | Map vendor | 100 | 20% | 16 |
| | | Trusted source | 80 | 20% | |
| | | Location owner | 65 | 20% | |
| | | Community | 50 | 20% | |
| WHERE 706 | Geocode Confidence | Street and number | 100 | 20% | 16 |
| | | POI match | 80 | 20% | |
| | | Street only | 50 | 20% | |
| | | No match | 0 | 20% | |
| WHAT 708 | What is it? | Point Address | 100 | 10% | 7.5 |
| | | Address | 75 | 10% | |
| | | Geopoint | 50 | 10% | |
| WHEN 710 | When Updated | < One year | 100 | 10% | 9 |
| | | One year – two years | 90 | 10% | |
| | | Two years – three years | 75 | 10% | |
| | | > Three years | 50 | 10% | |

LOCATION SCORE: 68.5

# FIG. 7

**Europäisches Patentamt**
**European Patent Office**
**Office européen des brevets**

# EUROPEAN SEARCH REPORT

Application Number

EP 10 25 0102

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/060313 A1 (NAIMAT AMAN [US] ET AL) 17 March 2005 (2005-03-17) * paragraph [0019] - paragraph [0039]; figures 1,3 * ----- | 1-15 | INV. G06F17/30 |
| | | | TECHNICAL FIELDS SEARCHED (IPC) |
| | | | G06F G06Q |

The present search report has been drawn up for all claims

| Place of search | Date of completion of the search | Examiner |
|---|---|---|
| Berlin | 1 July 2010 | Polzer, Andreas |

EPO FORM 1503 03.82 (P04C01)

## ANNEX TO THE EUROPEAN SEARCH REPORT
## ON EUROPEAN PATENT APPLICATION NO.

EP 10 25 0102

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2010

| Patent document cited in search report | Publication date | Patent family member(s) | Publication date |
|---|---|---|---|
| US 2005060313 A1 | 17-03-2005 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 12362751 B
- US 12362786 B
- US 12362807 B